# EUROPÄISCHE PATENTSCHRIFT

(11) **EP 2 589 095 B1**
(45) Veröffentlichungstag und Bekanntmachung des Hinweises auf die Patenterteilung: **19.03.2014**
(21) Anmeldenummer: 11716937.5
(22) Anmeldetag: 02.05.2011
(51) Int. Cl.: H01M 2/20, H01M 2/22

(54) **BATTERIEZELLENVERBINDER, VERFAHREN ZUR HERSTELLUNG EINES BATTERIEZELLENVERBINDERS, BATTERIE, BATTERIESYSTEM UND KRAFTFAHRZEUG**
BATTERY CELL CONNECTOR, METHOD FOR PRODUCING A BATTERY CELL CONNECTOR, BATTERY, BATTERY SYSTEM, AND MOTOR VEHICLE
CONNECTEUR D'ÉLÉMENTS DE BATTERIE, PROCÉDÉ DE FABRICATION D'UN CONNECTEUR D'ÉLÉMENTS DE BATTERIE, BATTERIE, SYSTÈME DE BATTERIE ET VÉHICULE AUTOMOBILE

(30) Priorität: 01.07.2010 DE 102010030809
(43) Veröffentlichungstag der Anmeldung: 08.05.2013
(73) Patentinhaber: Robert Bosch GmbH, 70442 Stuttgart (DE); Samsung SDI Co., Ltd., Yongin-si Gyeonggi-do 446-577 (KR)
(72) Erfinder: REITZLE, Alexander, 89231 Neu-Ulm (DE); BUBECK, Conrad, 73728 Esslingen (DE)
(74) Vertreter: Bee, Joachim
(86) Internationale Anmeldenummer: PCT/EP2011/056921
(87) Internationale Veröffentlichungsnummer: WO 2012/000702

(56) Entgegenhaltungen:
- WO-A1-00/11730
- WO-A1-2007/071425
- DE-A1-102008 018 204

## Beschreibung

Die vorliegende Erfindung betrifft einen Verbinder zur Herstellung einer elektrisch leitfähigen Verbindung zwischen Batteriezellen-Terminals, insbesondere zwischen Batteriezellen-Terminals mehrerer Batteriezellen zwecks elektrischer Verknüpfung dieser Batteriezellen, wobei der Verbinder wenigstens zwei Verbindungsabschnitte aus jeweils unterschiedlichem Material umfasst, die in wenigstens einem Verbindungsbereich durch einander kontaktierende Oberflächen elektrisch leitfähig miteinander verbunden sind.

Außerdem betrifft die vorliegende Erfindung ein Verfahren zur Herstellung eines erfindungsgemäßen Verbinders, sowie eine Batterie, insbesondere eine Lithium-lonen-Batterie oder eine Nickel-Metallhydrid-Batterie, die wenigstens einen erfindungsgemäßen Verbinder umfasst, sowie ein Batteriesystem, welches eine Mehrzahl von Batterien, insbesondere Lithium-Ionen-Batterien oder Nickel-Metallhydrid-Batterien sowie wenigstens einen erfindungsgemäßen Verbinder umfasst. Ergänzt wird die vorliegende Erfindung durch ein Kraftfahrzeug, insbesondere ein elektromotorisch antreibbares Kraftfahrzeug, welches wenigstens eine erfindungsgemäße Batterie oder ein erfindungsgemäßes Batteriesystem aufweist.

Eine Batterie, die eine oder mehrere galvanische Batteriezellen umfasst, dient als elektrochemischer Energiespeicher und Energiewandler. Bei der Entladung der Batterie bzw. der jeweiligen Batteriezelle wird in der Batterie gespeicherte chemische Energie durch eine elektrochemische Redoxreaktion in elektrische Energie umgewandelt. Diese elektrische Energie kann somit je nach Bedarf von einem Nutzer angefordert werden.

Insbesondere in Hybrid- und Elektrofahrzeugen werden in so genannten Batteriepacks Lithium-Ionen-Batterien oder Nickel-Metallhydrid-Batterien eingesetzt, die aus einer großen Anzahl in Serie geschalteter elektrochemischer Zellen bestehen. Üblicherweise dient dabei ein Batteriemanagementsystem inklusive einer Batteriezustandserkennung zur Sicherheitsüberwachung und zur Gewährleistung einer möglichst hohen Lebensdauer.

### Stand der Technik

Es ist bekannt, Terminals oder Pole von Batterien bzw. Batteriezellen zwecks Herstellung von Reihen- oder Parallelschaltung miteinander fest zu verbinden. Zur Herstellung dieser festen Verbindung, insbesondere zur Herstellung von Verbindungen unterschiedlicher metallischer Werkstoffe, sind diverse Verfahren bekannt. Es ist z. B. eine nicht-lösbare Verbindung unterschiedlicher Metall-Werkstoffe z. B. mittels Walzplattieren herstellbar.

Aus der DE 10 2008 018 204 A1 ist ein Verbundwerkstoff bekannt, der mittels Kaltwalzplattieren hergestellt wird. Dieser Verbundwerkstoff umfasst einen niedriglegierten Stahlwerkstoff, eine Zwischenschicht aus einem Kupfer- oder Nickel-Werkstoff und eine Schicht aus einen hochlegierten Stahl-Werkstoff. Derartige Verbundwerkstoffe weisen den Vorteil relativ geringer Kosten aufgrund der Verwendung des niedriglegierten Stahls in Verbindung mit alternativen Materialeigenschaften aufgrund der Verwendung des hochlegierten Stahls auf.

Zur Verbindung von Terminals bzw. Polen von Batteriezellen wird jedoch aufgrund der für gewöhnlich relativ hohen Stückzahl ein Schweißverfahren wie z. B. Laserschweißen angewendet. Nachteilig dabei ist, dass sich aufgrund des unterschiedlichen Materials der Terminals bzw. der Batteriezellenpole, die üblicherweise aus kupfer- und aluminiumhaltigen Werkstoffen bestehen und demzufolge unterschiedliche Schmelzpunkte aufweisen, technologische Probleme einstellen, die nur mit relativ hohem Aufwand bewältigt werden können.

Ein weiteres Problem bei der Verbindung von kupfer- und aluminiumhaltigen Werkstoffen zwecks Verbindung von Batteriezellenpolen bzw.
Batteriezellen-Terminals besteht in der Korrosionsanfälligkeit. Die beiden unterschiedlichen Materialien bilden zusammen ein elektrochemisches Spannungspotenzial, welches zu Korrosion führt. Die Korrosion wird gegebenenfalls dadurch verstärkt, dass bei Batterien bzw. Batteriesystemen, die z. B. zum Antrieb von Kraftfahrzeugen genutzt werden, aufgrund unterschiedlicher Temperaturverhältnisse im Batteriesystem gegebenenfalls Kondenswasser gebildet wird, welches bei einer Benetzung der Verbindungsstelle zwischen dem kupferhaltigen Werkstoff und dem aluminiumhaltigen Werkstoff als so genanntes elektrochemisches Lokalelement wirkt. Durch das Kondenswasser werden Ionen transportiert und durch die Feststoffe der Materialien die Elektronen. Bei einem solchen Korrosionsprozess wird das unedlere Metall aufgelöst und das Edlere bleibt unverändert. Die Korrosion führt üblicherweise zu einer Vergrößerung des Übergangswiderstandes zwischen den beiden Materialien durch Ausbildung von oxidischen Ablagerungen und im schlimmsten Fall zu einer vorzeitigen Alterung bis hin zu einem Ausfall des Batteriesystems.

### Offenbarung der Erfindung

Zur Lösung dieses Problems wird erfindungsgemäß ein Verbinder zur Herstellung einer elektrisch leitfähigen Verbindung zwischen Batteriezellen-Terminals zur Verfügung gestellt, der insbesondere zwischen Batteriezellen-Terminals mehrerer Batteriezellen zwecks elektrischer Verknüpfung dieser Batteriezellen anwendbar ist. Dieser Verbinder umfasst wenigstens zwei Verbindungsabschnitte aus jeweils unterschiedlichem Material, die in wenigstens einem Verbindungsbereich durch einander kontaktierende Oberflächen elektrisch leitfähig miteinander verbunden sind. Die Verbindung der beiden Verbindungsabschnitte ist dabei derart realisiert, dass Teilchen der aneinander anliegenden Oberflächen der beiden Verbindungsabschnitte in einer Grenzschicht durchmischt vorliegen. Das heißt, dass durch ein spezielles Verbindungsverfahren der beiden Verbindungsabschnitte in der Grenzschicht, die sich an der Kontaktierungsfläche der Oberflächen ausbildet, eine Diffusion stattgefunden hat.

Unter einem Terminal wird dabei der Teil einer Batteriezelle verstanden, der im Batteriezellenkörper mit einer Elektrode elektrisch leitfähig verbunden ist und mit einem Abschnitt, dem so genannten Batteriepol, aus dem Batteriezellenkörper herausragt.

### Vorteile der Erfindung

Bedingt durch die Durchmischung der Teilchen der aneinander anliegenden Verbindungsabschnitte in der Grenzschicht existiert somit kein Spalt, in den Kondensflüssigkeit eindringen könnte. Das heißt, dass nur eine minimale Angriffsfläche für eine kondensatbedingte Korrosion zur Verfügung steht, nämlich an dem Außen- bzw. Randbereich der Grenzschicht. Somit wird eine Korrosion zwischen den beiden Oberflächen verhindert und damit die Lebensdauer des Verbinders wesentlich erhöht sowie der Übergangswiderstand, insbesondere bei älteren Verbindern, wesentlich verringert und die Funktionssicherheit über einen längeren Zeitraum gewährleistet.

Vorteilhafterweise ist die Durchmischung der Teilchen an den Oberflächen derart, dass die Verbindungsabschnitte im Verbindungsbereich einen Verbund-Werkstoff ausbilden. Das heißt, dass im Verbindungsbereich der Verbinder einen Werkstoff aus den zwei miteinander verbundenen Materialien aufweist. Die Verbindung ist durch Stoff- und/oder Formschluss realisiert.

Vorzugsweise ist die Durchmischung durch Plattieren erzeugt. Das heißt, dass die Durchmischung durch ein Verfahren hergestellt ist, bei welchem ein unedleres Metall durch ein anderes, edleres Metall überdeckt wird. Dadurch lässt sich eine unlösbare Verbindung zwischen den beiden Materialien herstellen. Dies ist z. B. durch Aufwalzen von Metallfolien oder Metallbändern, auch Schweißen und insbesondere Laser-, Ultraschall- oder Reibschweißung realisierbar. Erfindungsgemäß sind alle Schweißverfahren anwendbar, bei denen eine großflächige Verbindung zwischen den Oberflächen realisierbar ist. Alternativ lässt sich die Plattierung auch durch Auflöten, Angießen (Ionenplattierung), Tauchen, Sprengplattieren oder durch galvanische Verfahren wie z. B. Elektroplattieren erreichen.

In besonders bevorzugter Ausführungsform ist vorgesehen, dass die Durchmischung durch Kaltwalzplattieren erzeugt ist und ein erster Verbindungsabschnitt aus einem Kupfer-Werkstoff besteht und ein zweiter Verbindungsabschnitt aus einem Aluminium-Werkstoff besteht. Beim Kaltwalzplattieren werden zwei Schichten unter Einwirkung eines großen Drucks, wie z. B. beim Walzen, aneinander gedrückt, wobei je nach Größe des Drucks Wärme entsteht, die die Diffusion der Teilchen an den Verbindungsoberflächen zur Erzeugung der Grenzschicht begünstigt. Alternativ lassen sich die genannten Werkstoffe auch einem Warmwalzplattierungsprozess unterziehen.

Als verwendbare Kupfer-Werkstoffe können Bronze-Werkstoffe oder Messing-Werkstoffe eingesetzt werden. Weitere alternativ einsetzbare Werkstoffe sind Nickel, Stahl, Kobalt und Silber bzw. Legierungen davon, die untereinander erfindungsgemäß kombiniert oder mit einem genannten Aluminium- oder Kupfer-Werkstoff im erfindungsgemäßen Verbinder kombiniert werden können.

Insbesondere bietet es sich an, dass der erste Verbindungsabschnitt aus einem Kupfer-Werkstoff E-Cu57 oder E-Cu58 besteht.

In diesem Falle sollte der zweite Verbindungsabschnitt vorzugsweise aus Al6061 oder Al3303 H14 bestehen. Es ist dabei jedoch die Verwendung anderer Kupfer- oder Aluminium-Werkstoffe in Abhängigkeit vom verwendeten Plattierverfahren nicht ausgeschlossen.

Ein weiterer Aspekt der vorliegenden Erfindung ist somit ein Verfahren zur Herstellung des erfindungsgemäßen Verbinders, bei dem die Verbindungsabschnitte durch Kaltwalzplattieren elektrisch leitfähig miteinander verbunden werden.

Außerdem umfasst die vorliegenden Erfindung eine Batterie, insbesondere eine Lithium-Ionen-Batterie oder eine Nickel-Metallhydrid-Batterie, die jeweils eine Mehrzahl von Batteriezellen sowie wenigstens einen erfindungsgemäßen Verbinder umfasst, wobei der Verbinder ein Terminal einer ersten Batteriezelle der Batterie mit einem Terminal einer zweiten Batteriezelle der Batterie verbindet. Dabei ist unter einem Terminal die jeweilige Kathode oder Anode zu verstehen, die außerhalb der Batteriezelle den jeweiligen Minus- bzw. Pluspol ausbildet. Der erfindungsgemäße Verbinder dient somit zur Herstellung einer Schaltung zwischen den Batteriezellen, vorzugsweise einer Reihenschaltung. Üblicherweise ist dabei jeweils ein Pol einer Batteriezelle, vorteilhafterweise der Minus-Pol, aus einem Kupfer-Werkstoff und der Plus-Pol aus einem Aluminium-Werkstoff ausgeführt. Somit lässt sich der erfindungsgemäße Verbinder mit seiner kupferhaltigen Seite an den Minus-Pol einer ersten Batteriezelle und an den Plus-Pol einer zweiten Batteriezelle anschließen. Der Vorteil besteht dabei darin, dass jeweils gleichartige oder zumindest dasselbe Basismaterial aufweisende Materialien verbunden werden, was technologisch einfacher und kostensparender realisierbar ist als die Verbindung unterschiedlicher Materialien.

Ein weiterer Aspekt der vorliegenden Erfindung ist ein Batteriesystem, welches eine Mehrzahl von Batterien, insbesondere Lithium-Ionen-Batterien oder Nickel-Metallhydrid-Batterien sowie wenigstens einen erfindungsgemäßen Verbinder umfasst, wobei der Verbinder einen Terminal einer ersten Batterie mit einem Terminal einer zweiten Batterie verbindet. Somit lassen sich durch den erfindungsgemäßen Verbinder mehrere Batterien schaltungstechnisch miteinander verbinden. In weiterer Ausführungsform werden ein oder mehrere weitere erfindungsgemäße Verbinder dazu genutzt, einzelne Batteriezellen innerhalb der miteinander verbundenen Batterien miteinander zu verbinden. Das heißt, dass der erfindungsgemäße Verbinder nicht nur zur Verbindung von Batteriezellen einer Batterie verwendet werden kann, sondern auch zur Verbindung und schaltungstechnischen Verknüpfung mehrerer Batterien.

Die Erfindung wird durch ein Kraftfahrzeug vervollständigt, insbesondere durch ein elektromotorisch antreibbares Kraftfahrzeug, welches wenigstens eine erfindungsgemäße Batterie oder ein erfindungsgemäßes Batteriesystem umfasst, wobei die Batterie mit einem Antriebssystem des Kraftfahrzeuges verbunden ist.

### Zeichnungen

Ausführungsbeispiele der Erfindung werden anhand der Zeichnung und der nachfolgenden Beschreibung näher erläutert. Es zeigt:

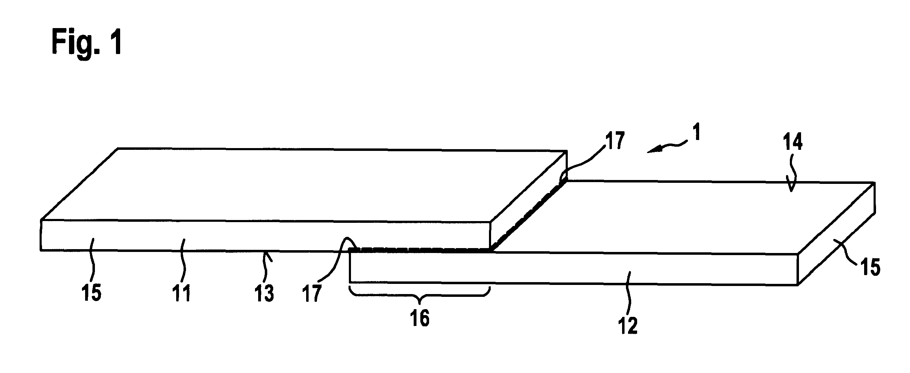

Figur 1 einen erfindungsgemäßen Verbinder.

Figur 1 zeigt einen erfindungsgemäßen Verbinder 1, der einen ersten Verbindungsabschnitt 11 sowie einen zweiten Verbindungsabschnitt 12 aufweist. Die beiden Verbindungsabschnitte 11, 12 bilden eine Überlappung aus, die den Verbindungsbereich 16 definiert. Die Verbindung der beiden Verbindungsabschnitte 11, 12 im Verbindungsbereich 16 ist durch die Anlage der ersten Oberfläche 13 des ersten Verbindungsabschnitts 11 an der zweiten Oberfläche 14 des zweiten Verbindungsabschnittes 12 realisiert.

Im Verbindungsbereich 16 ist der Verbinder 1 als Verbundwerkstoff ausgeführt. In der Grenzschicht 17, die im Verbindungsbereich 16 an der ersten Oberfläche 13 sowie der zweiten Oberfläche 14 vorhanden ist, liegen die Teilchen der Oberflächen 13, 14 in einer Durchmischung bzw. in einer Diffusion vor. Eine solche Durchmischung ist, wie bereits erläutert, z. B. durch Plattieren, insbesondere Walzplattieren herstellbar. Das heißt, dass in der Grenzschicht 17 nicht das Material des ersten Verbindungsabschnitts 11 oder des zweiten Verbindungsabschnitts 12 vorliegt, sondern ein Material, welches eine Durchmischung der Teilchen des ersten Verbindungsabschnitts 11 und des zweiten Verbindungsabschnitts 12 aufweist. Dadurch sind die beiden Verbindungsabschnitte 11, 12 aneinander fixiert.

An den dem Verbindungsbereich 16 gegenüberliegenden Enden der jeweiligen Verbindungsabschnitte 11, 12 weisen diese die Befestigungsseiten 15 auf. An diesen Befestigungsseiten 15 ist der Verbinder 1 an die Terminals bzw. an die Pole der jeweiligen Batteriezellen oder Batterien zu montieren, um somit eine elektrisch leitfähige Verbindung zwischen den Batterie-Terminals bzw. -Polen auszubilden.

Durch die Durchmischung der Teilchen der Oberflächen 13, 14, wie z. B. durch Kaltwalzplattieren erzeugbar, lässt sich eine hohe Leitfähigkeit der Verbindung zwischen den einzelnen Materialien des ersten Verbindungsabschnitts 11 und des zweiten Verbindungsabschnitts 12, die z. B. aus einem kupferhaltigen Werkstoff und einem aluminiumhaltigen Werkstoff ausgeführt sein können, herstellen. Es existiert kein Spalt zwischen den Oberflächen 13, 14, so dass eine Angriffsfläche bzw. ein Angriffsbereich für Korrosion auf die Außenseite der Grenzschicht 17 an den Rändern der Verbindungsabschnitte 11, 12 reduziert ist. Kondensationsbedingt auftretendes Wasser in Batteriesystemen kann somit nicht zwischen die Verbindungsabschnitte 11, 12 gelangen und dort zur Spaltkorrosion führen.

Der Rand der Grenzschicht 17 kann zur Verhinderung einer Korrosion an dieser Grenzschicht mit einer geeigneten Isolierung versehen sein. Eine derartige Isolierung verhindert eine Benetzung der Randzone der Grenzschicht 17 mit Kondenswasser, so dass das Kondenswasser keine Verbindung der Materialien des ersten Verbindungsabschnitts 11 und des zweiten Verbindungsabschnitts 12 herstellen kann. Eine solche Isolierung kann neben einer geeigneten Beschichtung bzw. Lackierung ein Schrumpfschlauch sein, der die Randzone der Grenzschicht 17 abdeckt.

Der erfindungsgemäße Verbinder 1 kann derart ausgestaltet sein, dass der erste Verbindungsabschnitt 11 aus dem kupferhaltigen Werkstoff gefertigt ist und der zweite Verbindungsabschnitt 12 aus dem aluminiumhaltigen Werkstoff gefertigt ist. Vorteilhafterweise ist dann der erste Verbindungsabschnitt 11 kürzer ausgeführt als der zweite Verbindungsabschnitt 12, um den Anteil des kostenintensiveren kupferhaltigen Werkstoffs am Verbinder 1 zu reduzieren. Zu diesem Zweck kann der Verbindungsbereich 16 in der Nähe des Batteriezellen-Terminals bzw. -Pols angeordnet sein, an dem der erste Verbindungsabschnitt 11 angeschlossen ist. In besonderer Ausführung ist der erste, kupferhaltige Verbindungsabschnitt 11 in der Batteriezelle mit deren Terminal verbunden, woraus sich der Vorteil ergibt, dass außerhalb der Batteriezelle und zum Zweck der Montage der einzelnen Zellen nur noch jeweils eine Verbindung, nämlich die zur anzuschließenden Batteriezelle, zu realisieren ist. Neben einer Vereinfachung der durchzuführenden Montageschritte ergibt sich der technologische Vorteil, dass lediglich nur noch ein Verbindungsprozess durchzuführen ist, bei dem im Wesentlichen gleiche Materialien verbunden werden, da in diesem Falle lediglich nur noch der aluminiumhaltige zweite Verbindungsabschnitt 12 mit dem Aluminium-Terminal der zweiten Batteriezelle zu verbinden ist.

## Patentansprüche

1. Verbinder (1) zur Herstellung einer elektrisch leitfähigen Verbindung zwischen Batteriezellen-Terminals, insbesondere zwischen Batteriezellen-Terminals mehrerer Batteriezellen zwecks elektrischer Verknüpfung dieser Batteriezellen, wobei der Verbinder (1) wenigstens zwei Verbindungsabschnitte (11, 12) aus jeweils unterschiedlichem Material umfasst, die in wenigstens einem Verbindungsbereich (16) durch einander kontaktierende Oberflächen (13, 14) elektrisch leitfähig miteinander verbunden sind, **dadurch gekennzeichnet, dass** Teilchen der aneinander anliegenden Oberflächen (13, 14) der beiden Verbindungsabschnitte (11, 12) in einer Grenzschicht (17) durchmischt vorliegen.

2. Verbinder zur Herstellung einer elektrisch leitfähigen Verbindung nach Anspruch 1, wobei eine derartige Durchmischung vorliegt, dass die Verbindungsabschnitte (11, 12) im Verbindungsbereich (16) einen Verbundwerkstoff ausbilden.

3. Verbinder zur Herstellung einer elektrisch leitfähigen Verbindung nach wenigstens einem der vorhergehenden Ansprüche, wobei die Durchmischung durch Plattieren erzeugt ist.

4. Verbinder zur Herstellung einer elektrisch leitfähigen Verbindung nach Anspruch 3, wobei die Durchmischung durch Kaltwalzplattieren erzeugt ist, und ein erster Verbindungsabschnitt (11) aus einem Kupferwerkstoff besteht und ein zweiter Verbindungsabschnitt (12) aus einem Aluminiumwerkstoff besteht.

5. Verbinder zur Herstellung einer elektrisch leitfähigen Verbindung nach Anspruch 4, bei dem der erste Verbindungsabschnitt (11) aus E-Cu57 oder E-Cu58 besteht.

6. Verbinder zur Herstellung einer elektrisch leitfähigen Verbindung nach wenigstens einem der Ansprüche 4 und 5, bei dem der zweite Verbindungsabschnitt (12) aus Al6061 oder Al3003 H14 besteht.

7. Verfahren zur Herstellung eines Verbinders gemäß wenigstens einem der Ansprüche 1 bis 3, **dadurch gekennzeichnet, dass** die Verbindungsabschnitte (11, 12) durch Kaltwalzplattieren elektrisch leitfähig miteinander verbunden werden.

8. Batterie, insbesondere Lithium-Ionen-Batterie oder Nickel-Metallhydrid-Batterie, umfassend eine Mehrzahl von Batteriezellen, **dadurch gekennzeichnet, dass** sie weiterhin wenigstens einen Verbinder (1) gemäß einem der Ansprüche 1 bis 6 umfasst, wobei der Verbinder (1) ein Terminal einer ersten Batteriezelle der Batterie mit einem Terminal einer zweiten Batteriezelle der Batterie verbindet.

9. Batteriesystem, umfassend eine Mehrzahl von Batterien, insbesondere Lithium-Ionen-Batterien oder Nickel-Metallhydrid-Batterien, **dadurch gekennzeichnet, dass** es weiterhin wenigstens einen Verbinder (1) gemäß einem der Ansprüche 1 bis 6 umfasst, wobei ein Verbinder (1) ein Terminal einer ersten Batterie mit einem Terminal einer zweiten Batterie verbindet, und/oder wobei ein Verbinder (1) ein Terminal einer ersten Batteriezelle mit einem Terminal einer zweiten Batteriezelle verbindet.

10. Kraftfahrzeug, insbesondere elektromotorisch antreibbares Kraftfahrzeug, **dadurch gekennzeichnet, dass** es wenigstens eine Batterie nach Anspruch 8 oder ein Batteriesystem nach Anspruch 9 umfasst, wobei die Batterie oder das Batteriesystem mit einem Antriebssystem des Kraftfahrzeuges verbunden ist.

## Claims

1. Connector (1) for producing an electrically conductive connection between battery cell terminals, in particular between battery cell terminals of a plurality of battery cells, in order to electrically link said battery cells, wherein the connector (1) comprises at least two connecting portions (11, 12), each of which comprises a different material and which connecting portions are mutually connected in an electrically conductive manner in at least one connecting region (16) by means of mutually contacting surfaces (13, 14), **characterized in that** particulate materials of the surfaces (13, 14) of the two connecting portions (11, 12), which surfaces lie one on top of the other, are present in a mixed state in a boundary layer (17).

2. Connector for producing an electrically conductive connection according to Claim 1, wherein said particulate materials are mixed in such a manner that the connecting portions (11, 12) in the connecting region (16) form a composite material.

3. Connector for producing an electrically conductive connection according to at least one of the preceding claims, wherein said particulate materials are mixed by means of plating.

4. Connector for producing an electrically conductive connection according to Claim 3, wherein said particulate materials are mixed by means of cold-roll plating and a first connecting portion (11) is embodied from a copper material and a second connecting portion (12) is embodied from an aluminum material.

5. Connector for producing an electrically conductive connection according to Claim 4, in which the first connecting portion (11) is embodied from E-Cu57 or E-Cu58.

6. Connector for producing an electrically conductive connection according to at least one of Claims 4 and 5, in which the second connecting portion (12) is embodied from Al6061 or Al3003 H14.

7. Method for producing a connector according to at least one of Claims 1 to 3, **characterized in that** the connecting portions (11, 12) are mutually connected in an electrically conductive manner by means of cold-roll plating.

8. Battery, in particular a lithium-ion battery or a nickel metal-hydride battery, comprising a plurality of battery cells, **characterized in that** said battery comprises in addition at least one connector (1) according to any one of Claims 1 to 6, wherein the connector (1) connects a terminal of a first battery cell of the battery to a terminal of a second battery cell of the battery.

9. Battery system comprising a plurality of batteries, in particular lithium-ion batteries or nickel metal-hydride batteries, **characterized in that** said battery system comprises in addition at least one connector (1) in accordance with one of Claims 1 to 6, wherein a connector (1) connects a terminal of a first battery to a terminal of a second battery, and/or wherein a connector (1) connects a terminal of a first battery cell to a terminal of a second battery cell.

10. Motor vehicle, in particular a motor vehicle that can be driven by an electric motor, **characterized in that** said motor vehicle comprises at least one battery according to Claim 8 or a battery system according to Claim 9, wherein the battery or the battery system is connected to a drive system of the motor vehicle.

## Revendications

1. Connecteur (1) pour la réalisation d'une connexion électriquement conductrice entre des bornes d'éléments de batterie, en particulier entre des bornes d'éléments de batterie de plusieurs éléments de batterie en vue du raccordement électrique de ces éléments de batterie, le connecteur (1) comportant au moins deux portions de connexion (11, 12) constituées respectivement de matériaux différents, lesquelles sont connectées les unes aux autres de manière électriquement conductrice dans au moins une région de connexion (16) par des surfaces (13, 14) en contact l'une avec l'autre, **caractérisé en ce que** des particules des surfaces (13, 14) s'appliquant l'une contre l'autre des deux portions de connexion (11, 12) sont présentes de manière mélangée dans une couche limite (17).

2. Connecteur pour la réalisation d'une connexion électriquement conductrice selon la revendication 1, dans lequel il existe un mélange tel que les portions de connexion (11, 12) forment un matériau composite dans la région de connexion (16).

3. Connecteur pour la réalisation d'une connexion électriquement conductrice selon au moins l'une quelconque des revendications précédentes, dans lequel le mélange est produit par placage.

4. Connecteur pour la réalisation d'une connexion électriquement conductrice selon la revendication 3, dans lequel le mélange est produit par placage par laminage à froid, et une première portion de connexion (11) est constituée d'un matériau à base de cuivre et une deuxième portion de connexion (12) est constituée d'un matériau à base d'aluminium.

5. Connecteur pour la réalisation d'une connexion électriquement conductrice selon la revendication 4, dans lequel la première portion de connexion (11) est constituée de E-Cu57 ou de E-Cu58.

6. Connecteur pour la réalisation d'une connexion électriquement conductrice selon au moins l'une quelconque des revendications 4 et 5, dans lequel la deuxième portion de connexion (12) est constituée d'Al6061 ou d'Al3003.

7. Procédé de réalisation d'un connecteur selon au moins l'une quelconque des revendications 1 à 3, **caractérisée en ce que** les portions de connexion (11, 12) sont reliées les unes aux autres de manière électriquement conductrice par placage par laminage à froid.

8. Batterie, en particulier batterie aux ions lithium ou batterie nickel-métal hybride, comportant une pluralité d'éléments de batterie, **caractérisée en ce qu'**elle comporte en outre au moins un connecteur (1) selon l'une quelconque des revendications 1 à 6, le connecteur (1) connectant une borne d'un premier élément de la batterie à une borne d'un deuxième élément de la batterie.

9. Système de batteries comportant une pluralité de batteries, en particulier des batteries aux ions lithium ou des batteries nickel-métal hybrides, **caractérisé en ce qu'**il comporte en outre au moins un connecteur (1) selon l'une quelconque des revendications 1 à 6, un connecteur (1) connectant une borne d'une première batterie à une borne d'une deuxième batterie et/ou un connecteur (1) connectant une borne d'un premier élément de batterie à une borne d'un deuxième élément de batterie.

10. Véhicule automobile, en particulier véhicule automobile pouvant être entraîné par un moteur électrique, **caractérisé en ce qu'**il comporte au moins une batterie selon la revendication 8 ou un système de batteries selon la revendication 9, la batterie ou le système de batteries étant connecté(e) à un système d'entraînement du véhicule automobile.
